Europäisches Patentamt

European Patent Office

Office européen des brevets

(19)

(11) EP 0 798 936 A1

(12) EUROPEAN PATENT APPLICATION

(43) Date of publication:
01.10.1997 Bulletin 1997/40

(51) Int. Cl.⁶: H04N 9/78

(21) Application number: 97104107.4

(22) Date of filing: 12.03.1997

(84) Designated Contracting States:
DE NL

(30) Priority: 25.03.1996 JP 68065/96

(71) Applicant: MOTOROLA, INC.
Schaumburg, IL 60196 (US)

(72) Inventors:
• Saionji, Osamu
  Ibaraki-shi, Osaka 567 (JP)

• Miyaura, Osamu
  Kawanishi-shi, Hyogo 666-01 (JP)

(74) Representative: Hudson, Peter David
Motorola,
European Intellectual Property Operations,
Midpoint
Alencon Link
Basingstoke, Hampshire RG21 7PL (GB)

(54) Y/C separating circuit preventing dot and cross-color interference

(57) An object of the present invention is to provide a Y/C separating circuit which is able to separate a chroma signal and a luminance signal from a composite video signal which does not correlate in the vertical direction.

A Y/C separating circuit detects maximum and minimum values of the signal level among a chroma band signal in the composite video signal, a chroma band signal in the 1H delayed composite video signal, and a chroma band signal in the 2H delayed composite video signal, selects the second largest level among the detected maximum and minimum values and zero level, as a second-order-level signal. It then subtracts the resulting second-order-level signal from the chroma band signal in the 1H delayed composite video signal to produce a chroma signal, while it subtracts the resulting chroma signal from the 1H delayed composite video signal to produce a luminance signal.

Fig. 3

EP 0 798 936 A1

**Description**

FIELD OF THE INVENTION

The present invention relates to a Y/C separating circuit which separates a chroma signal and a luminance signal from a composite video signal.

BACKGROUND OF THE INVENTION

Recently, a comb filter has been used as a Y/C separating circuit for separating luminance and chroma signals from a composite video signal.

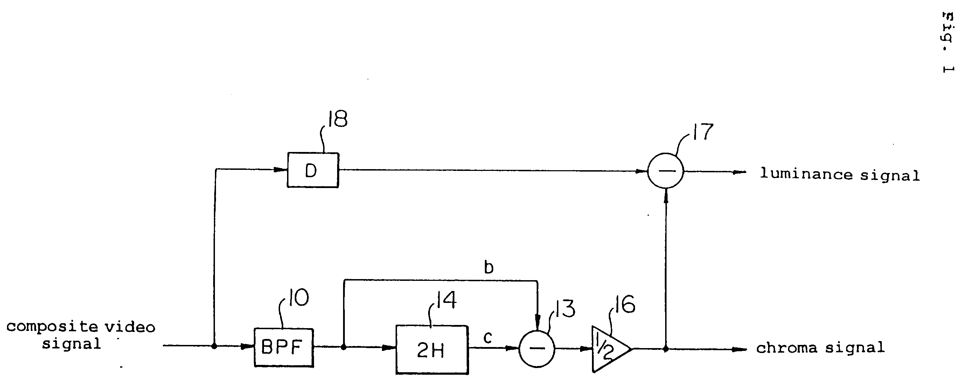

Fig. 1 is a diagram illustrating one example of the arrangement of a 2H comb filter for separating luminance and chroma signals from a PAL-format composite video signal.

In Fig. 1, a BPF (band-pass filter) 10 extracts a frequency component of a chroma signal band from a PAL-format composite video signal, and provides it as a chroma band signal b to a 2H delay element 14 and a subtractor 13, respectively. The 2H delay element 14 delays the chroma band signal b by two horizontal scanning periods and provides the resulting 2H delayed chroma band signal c to the subtractor 13. The subtractor 13 subtracts the chroma band signal b from the 2H delayed chroma band signal c and provides the resulting signal to a 1/2 coefficient multiplier 16. The 1/2 coefficient multiplier 16 multiplies by 1/2 the signal supplied from the subtractor 13 and outputs the resulting signal as a chroma signal, which is supplied to a subtractor 17. The subtractor 17 subtracts the chroma signal from the composite video signal delayed by a predetermined time at a delay element 18, and outputs the resulting signal as a luminance signal.

As described above, with the comb filter-based Y/C separating circuit, luminance and chroma signals are separated and extracted from the composite video signal by utilizing the fact that waveforms of the composite video signal are very similar between adjacent horizontal scanning periods and there is strong correlation relative to the vertical direction.

However, for some video signals, weakly correlated portions exist relative to the vertical direction, and vertical correlation may be lost due to the effects of extraneous noise and so on.

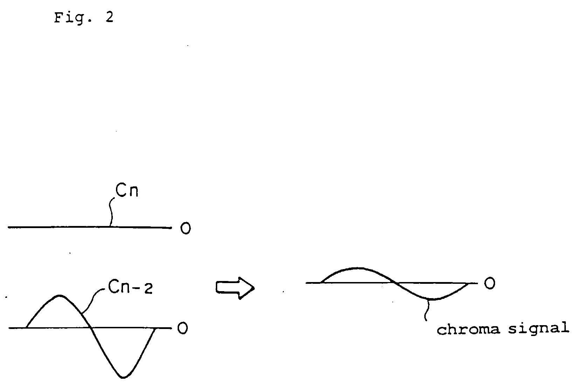

For example, let us assume that, as shown in Fig. 2, a waveform of a chroma signal on the n-th line in the composite video signal supplied to the Y/C separating circuit is $C_n$, and that on the (n-2)-th line, which is two horizontal scanning periods before the n-th line, is $C_{n-2}$. As shown in Fig. 2, both signal waveforms are not vertically correlated.

Thus, when signals of these $C_n$ and $C_{n-2}$ waveforms are supplied as the chroma band signal b and 1H delayed chroma band signal c, respectively, to the subtractor 13, the chroma signal outputted at the comb filter has half the amplitude of $C_{n-2}$, as shown in Fig. 2. This condition occurs over a processing period worthy of two lines in the Y/C separating circuit, thereby causing dot interference.

Consequently, if the composite video signal that is not vertically correlated is Y/C separated by such a 2H comb filter, signal degradation, such as dot interference over two lines, or cross-color interference, occurs, resulting in loss of image quality.

Accordingly, it is an object of the present invention to provide a Y/C separating circuit that can satisfactorily separate luminance and chroma signals, even from a composite video signal that is not vertically correlated.

SUMMARY OF THE INVENTION

According to the present invention, a Y/C separating circuit for separating chroma and luminance signals from a composite video signal comprises:

first delay means for delaying said composite video signal by a horizontal scanning period to produce a 1H delayed composite video signal;

second delay means for delaying the 1H delayed composite video signal by a horizontal scanning period to produce a 2H delayed composite video signal;

a first band-pass filter for extracting a frequency component of a chroma signal band from said composite video signal to produce a first chroma band signal;

a second band-pass filter for extracting a frequency component of a chroma signal band from said 1H delayed composite video signal to produce a second chroma band signal;

a third band-pass filter for extracting a frequency component of a chroma signal band from said 2H delayed composite video signal to produce a third chroma band signal;

maximum value detection means for detecting a maximum value of a signal among said first chroma band signal, said second chroma band signal and said third chroma band signal to produce a maximum chroma band signal corresponding to said maximum value;

minimum value detection means for detecting a minimum value of a signal among said first chroma band signal, said second chroma band signal and said third chroma band signal to produce a minimum chroma band signal corresponding to said minimum value;

a second-order-level detection circuit for detecting a second largest signal level among said maximum chroma band signal, said minimum chroma band signal and 0 level, as a second-order-level signal;

first subtraction means for subtracting said second-order-level signal from said second chroma band signal to produce a signal as said chroma signal; and

second subtracting means for subtracting said chroma signal from said 1H delayed composite video signal to produce a signal as said luminance signal.

According to the above means to fix the problem, when a PAL-format composite video signal supplied has vertical correlation, both the band-pass filter and comb filter perform Y/C separation; whereas if the composite video signal has no vertical correlation, only the band-pass filter performs Y/C separation. Thus, even if a composite video signal that is not vertically correlated is supplied, luminance and chroma signals can be obtained satisfactorily without causing dot interference and cross-color interference.

BRIEF DESCRIPTION OF THE DRAWINGS

Fig. 1 is a diagram illustrating the arrangement of a prior Y/C separating circuit.

Fig. 2 is an illustration for explaining the operation of the prior art Y/C separating circuit where the composite video signal has no vertical correlation.

Fig. 3 is a diagram illustrating the arrangement of a Y/C separating circuit according to the present invention.

Fig. 4 is an illustration for explaining the operation of the Y/C separating circuit according to the present invention where the composite video signal has vertical correlation.

Fig. 5 is an illustration for explaining the operation of the Y/C separating circuit according to the present invention where the composite video signal has vertical correlation.

Fig. 6 is an illustration for explaining the operation of the Y/C separating circuit according to the present invention where the composite video signal has no vertical correlation.

Fig. 7 is an illustration for explaining the operation of the Y/C separating circuit according to the present invention where the composite video signal has no vertical correlation.

Fig. 8 is an illustration for explaining the operation of the Y/C separating circuit according to the present invention where the composite video signal has no vertical correlation.

Fig. 9 is an illustration for explaining the operation of the Y/C separating circuit according to the present invention where the composite video signal has no vertical correlation.

Fig. 10 is an illustration for explaining the operation of the Y/C separating circuit according to the present invention where the composite video signal has no vertical correlation.

Fig. 11 is an illustration for explaining the operation of the Y/C separating circuit according to the present invention where the composite video signal has no vertical correlation.

DETAILED DESCRIPTION OF THE PREFERED EMBODIMENT

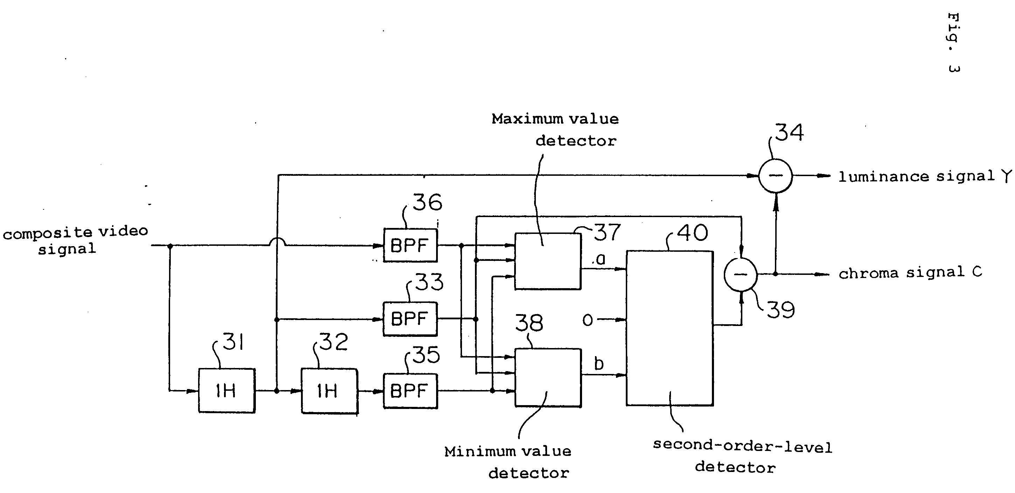

Fig. 3 is a diagram illustrating the arrangement of a Y/C separating circuit according to the present invention.

In Fig. 3, a 1H delay element 31 delays a PAL-format composite video signal supplied by one horizontal scanning period and provides the resulting 1H delayed composite video signal to a 1H delay element 32, a BPF (band-pass filter) 33, and a subtractor 34. The 1H delay element 32 delays the 1H delayed composite video signal by one horizontal scanning period and provides the resulting 2H delayed composite video signal to a BPF (band-pass filter) 35.

The BPF 35 extracts a frequency component of a chroma signal band from the 2H delayed composite video signal and provides the resulting 2H delayed chroma band signal to a maximum value detection circuit 37 and a minimum value detection circuit 38. The BPF 33 extracts a frequency component of a chroma signal band from the 1H delayed composite video signal and provides the resulting 1H delayed chroma band signal to a subtractor 39, maximum value detection circuit 37, and minimum value detection circuit 38. The BPF (band-pass filter) 36 extracts a frequency component of a chroma signal band from the composite video signal supplied and provides the resulting chroma band signal to the maximum value detection circuit 37 and minimum value detection circuit 38.

The maximum value detection circuit 37 detects a maximum value of the signal level among the first chroma band signal, 1H delayed chroma band signal, and 2H delayed chroma band signal, and provides a maximum chroma band signal a corresponding to the maximum value so detected to a second-order-level detection circuit 40. The minimum value detection circuit 38 detects a minimum value of the signal level among the chroma band signal, 1H delayed chroma band signal, and 2H delayed chroma band signal, and provides a minimum chroma band signal b corresponding to the minimum value so detected to the second-order-level detection circuit 40.

The second-order-level detection circuit 40 compares the levels of the maximum chroma band signal a, minimum chroma band signal b, and zero level, and select a signal having the second largest level among them. The second-order-level detection circuit 40 detects the signal level of that signal selected, and provides it as a second-order-level signal to the subtractor 39.

It should be appreciated that the second-order-level detection circuit 40 supplies the zero-level signal as the second-order-level signal to the subtractor 39 if the maximum chroma band signal a is at zero level, or if the minimum chroma band signal b is at zero level; if the maximum chroma band signal a is identical to the minimum chroma band signal b, the circuit 40 provides this identical signal as the second-order-level signal to the subtractor 39.

The subtractor 39 subtracts the second-order-level signal from the 1H delayed chroma band signal supplied from the BPF 33, and outputs the resulting signal as a chroma signal, which is then supplied to the subtractor 34.

The subtractor 34 subtracts the resulting chroma signal from the 1H delayed composite video signal supplied form the 1H delay element 31, and outputs the resulting signal as a luminance signal.

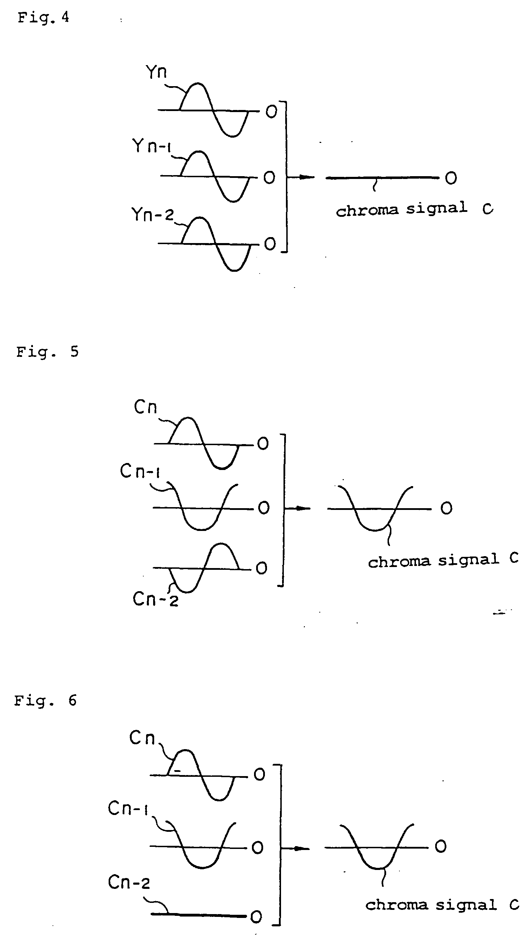

Next, the operation of the Y/C separating circuit according to the present invention is described with reference to Figs. 4-11.

Figs. 4 and 5 are illustrations depicting signal waveforms observed when a vertically correlated composite video signal is supplied to the Y/C separating circuit.

First, as shown in Fig. 4, it is assumed that a luminance signal component in a composite video signal $L_n$ corresponding to the n-th line is $Y_n$, that in the composite video signal $L_{n-1}$ corresponding to the (n-1)-th line, which is one horizontal scanning period before the n-th line, is $Y_{n-1}$, and that in the composite video signal $L_{n-2}$ corresponding to the (n-2)-th line, which is another one horizontal scanning period before the (n-1)-th line, is $Y_{n-2}$. It is further assumed that these luminance signal components are contained in the band of the chroma signal.

Then, because the three signals are of the same level, as shown in Fig. 4, the maximum chroma band signal a derived by the maximum value detection circuit 37 is identical to the minimum chroma band signal b derived by the minimum value detection circuit 38.

Consequently, the second-order-level detection circuit 40 provides $Y_{n-1}$ (= $Y_n$ = $Y_{n-2}$) shown in Fig. 4 to the subtractor 39 as the second-order-level signal. Thus, the chroma signal C outputted from the subtractor 39 is at zero level, as shown in Fig. 4, while the luminance signal Y outputted from the subtractor 34 has the same waveform as $Y_{n-1}$.

In other words, if the luminance signal is correlated over three lines, as shown in Fig. 4, both the BPF and comb filter are used to separate luminance and chroma signals, so that Y/C separation is performed without causing cross-color and dot interference.

Furthermore, as shown in Fig. 5, it is assumed that a chroma signal component in the composite video signal $L_n$ corresponding to the n-th line is $C_n$, that in the composite video signal $L_{n-1}$ corresponding to the (n-1)-th line, which is one horizontal scanning period before the n-th line, is $C_{n-1}$, and that in the composite video signal $L_{n-2}$ corresponding to the (n-2)-th line, which is another one horizontal scanning period before the (n-1)-th line, is $C_{n-2}$.

In Fig. 5, $C_n$ and $C_{n-2}$ retains vertical correlation as a chroma signal as their phase is inverted per two lines; however, $C_{n-1}$ is not correlated to either $C_n$ or $C_{n-2}$. It can be then seen from Fig. 5 that the maximum values of these $C_n$, $C_{n-1}$, and $C_{n-2}$ are always greater than zero level, and their minimum values are smaller than zero level. Thus, the second-order-level detection circuit 40 supplies the zero-level signal to the subtractor 39 as the second-order-level signal. Consequently, the chroma signal C outputted from the subtractor 39 has the same waveform as $C_{n-1}$, as shown in Fig 5.

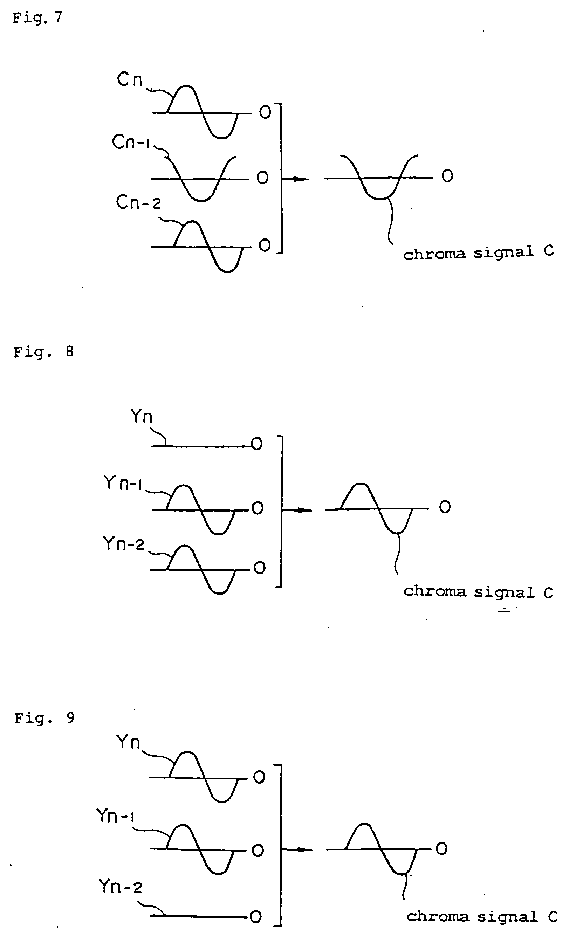

On the other hand, as shown in Figs. 6 and 7, even if $C_n$ and $C_{n-2}$ are not vertically correlated as a chroma signal where the phase is inverted per two lines, the maximum values of these $C_n$, $C_{n-1}$, and $C_{n-2}$ are always greater than zero level, and their minimum values are smaller than zero level. Thus, the second-order-level detection circuit 40 supplies the zero-level signal to the subtractor 39 as the second-order-level signal. Consequently, both in Figs. 5 and 6, the chroma signal C outputted from the subtractor 39 has the same waveform as $C_{n-1}$.

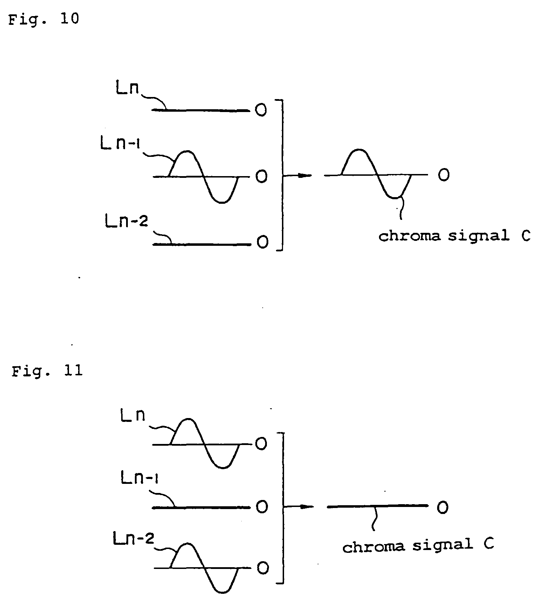

Also, as shown in Figs. 8 and 9, even if there is no vertical correlation as a luminance signal between luminance signal components $Y_n$ and $Y_{n-1}$ and between luminance signal components $Y_{n-1}$ and $Y_{n-2}$, the maximum values of these $Y_n$, $Y_{n-1}$, and $Y_{n-2}$ are always greater than zero level, and their minimum values are smaller than zero level. Thus, the second-order-level detection circuit 40 supplies the zero-level signal to the subtractor 39 as the second-order-level signal, and, as such, the chroma signal C outputted form the subtractor 39 has the same waveform as $Y_{n-1}$, as shown in Figs. 8 and 9.

Furthermore, as shown in Figs. 10 and 11, when a composite video signal corresponding to the n-th line is $L_n$, a composite video signal corresponding to the (n-1)-th line, which is one horizontal scanning period before the n-th line, is $L_{n-1}$, and a composite video signal corresponding to the (n-2)-th line, which is another one horizontal scanning period before the (n-1)-th line, is $L_{n-2}$, the second-order-level detection circuit 40 also supplies the zero-level signal to the subtractor 39 as the second-order-level signal, so that the chroma signal C outputted from the subtractor 39 has the same waveform as $L_{n-1}$.

As shown in Figs. 6-11, if a composite video signal that is not vertically correlated is supplied, the comb filter stops its operation, and the BPF alone operates to implement separation of the chroma signal.

Thus, even if there is no vertical correlation, as shown in Fig. 6, between the chroma signal component $C_n$ corresponding to the n-th line and the chroma signal component $C_{n-2}$ corresponding to the (n-2)-th line which is two horizontal scanning periods before the n-th line, the chroma signal can be separated and extracted without causing signal degradation as in Fig. 2.

As described in detail above, the Y/C separating circuit according to the present invention can advantageously produce satisfactory luminance and chroma signals without causing dot and cross-color interference, even when a PAL-format composite video signal that is not vertically correlated is supplied.

## Claims

1. A Y/C separating circuit for separating a chroma signal and a luminance signal from a composite video signal, which comprises:

   first delay means for delaying said composite video signal by a horizontal scanning period to produce a 1H delayed composite video signal; second delay means for delaying said 1H delayed composite video signal by a horizontal scanning period to produce a 2H delayed composite video signal; a first band-pass filter for extracting a frequency component of a chroma signal band from said composite video signal to produce a first chroma band signal; a second band-pass filter for extracting a frequency component of a chroma signal band from said 1H delayed composite video signal to produce a second chroma band signal; a third band-pass filter for extracting a frequency component of a chroma signal band from said 2H delayed composite video signal to produce a third chroma band signal; maximum value detection means for detecting a maximum value of a signal among said first chroma band signal, said second chroma band signal and said third chroma band signal to produce a maximum chroma band signal corresponding to said maximum value; minimum value detection means for detecting a minimum value of a signal among said first chroma band signal, said second chroma band signal and said third chroma band signal to produce a minimum chroma band signal corresponding to said minimum value; a second-order-level detection circuit for detecting a second largest signal level among said maximum chroma band signal, said minimum chroma band signal and 0 level signal, as a second-order-level signal; first subtraction means for subtracting said second-order-level signal from said second chroma band signal to produce a signal as said chroma signal; and second subtracting means for subtracting said chroma signal from said 1H delayed composite video signal to produce a signal as said luminance signal.

2. A Y/C separating circuit according to claim 1, wherein said composite video signal is a PAL-format video signal.

3. A Y/C separating circuit according to claim 1, wherein:

   when said maximum chroma band signal is at 0 level or said minimum chroma band signal is at 0 level, said second-order-level detection circuit produces said 0 level signal as said second-order-level signal; and when said maximum chroma band signal and said minimum chroma band signal are of the same level, said second-order-level detection circuit produces as said second-order-level signal a signal having the same level as said maximum chroma band signal and said minimum chroma band signal.

EP 0 798 936 A1

Fig. 1

Fig. 2

Fig. 3

EP 0 798 936 A1

Fig. 4

chroma signal C

Fig. 5

chroma signal C

Fig. 6

chroma signal C

Fig. 7

Cn

Cn-1

Cn-2

chroma signal C

Fig. 8

Yn

Yn-1

Yn-2

chroma signal C

Fig. 9

Yn

Yn-1

Yn-2

chroma signal C

Fig. 10

chroma signal C

Fig. 11

chroma signal C

EP 0 798 936 A1

| | European Patent Office | **EUROPEAN SEARCH REPORT** | Application Number EP 97 10 4107 |

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|----------|-------------------------------------------------------------------------------|-------------------|----------------------------------------------|
| X | EP 0 401 011 A (SONY CORP) 5 December 1990<br>* page 1, line 1 - page 1, line 44 *<br>* page 2, line 21 - page 2, line 30 *<br>* page 4, line 28 - page 5, line 58 *<br>--- | 1-3 | H04N9/78 |
| A | US 5 146 317 A (ISHIZU ATSUSHI  ET AL) 8 September 1992<br>* column 1, line 65 - column 2, line 29 *<br>* column 3, line 15 - column 4, line 55; figures 1A,1B,2 *<br>--- | 1-3 | |
| A | FR 2 509 547 A (SONY CORP) 14 January 1983<br>* page 1, line 1 - page 1, line 16; figure 18 *<br>* page 15, line 26 - page 17, line 6 *<br>----- | 1-3 | |
| | | | TECHNICAL FIELDS SEARCHED (Int.Cl.6)<br><br>H04N |

The present search report has been drawn up for all claims

| Place of search | Date of completion of the search | Examiner |
|-----------------|----------------------------------|----------|
| BERLIN | 13 June 1997 | Raeymaekers, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

12